# EUROPEAN PATENT APPLICATION

(11) **EP 3 190 514 A1**
(43) Date of publication of application: **12.07.2017**
(21) Application number: 15839014.6
(22) Date of filing: 05.02.2015
(51) Int. Cl.: G06F 9/445

(54) **BOOT ON-LINE UPGRADING APPARATUS AND METHOD**

(30) Priority: 05.09.2014 CN 201410452829
(71) Applicant: ZTE Corporation, Shenzhen, Guangdong 518057 (CN)
(72) Inventor: YANG, Lijun, Shenzhen Guangdong 518057 (CN)
(74) Representative: Brevalex
(86) International application number: PCT/CN2015/072299
(87) International publication number: WO 2016/033941

(57) **Abstract**

The disclosure discloses a BOOT online upgrading device. The device includes: a logical gating unit, at least two embedded Central Processing Units (CPUs) and OOT memories each corresponding to respective CPUs are connected to the logical gating unit through access buses; each embedded CPU includes BOOT upgrading drive modules for all the BOOT memories, and the BOOT upgrading drive modules are configured to execute BOOT version updating on the BOOT memories; and the logical gating unit is configured to provide an access channel from any embedded CPU to any BOOT memory. Correspondingly, the disclosure also discloses a BOOT online upgrading method. The problem of BOOT online upgrading failure or incapability of normal starting despite of successful upgrading is solved, BOOT online upgrading reliability is improved, and BOOT upgrading risk and later maintenance cost are reduced.

## Description

### TECHNICAL FIELD

The disclosure relates to the field of data communication, and more particularly to a BOOT online upgrading device and method.

### BACKGROUND

A data communication product usually adopts an embedded system architecture, and in the whole architecture and even on a single board of a certain architecture, multiple embedded chips (a Central Processing Unit (CPU), a Micro Control Unit (MCU) and the like) usually need to be controlled by programming, so as to realize more complex and efficient product functions. A BOOT version (usually stored in a device such as non-volatile storage device like a Not OR (NOR) FLASH and a Not AND (NAND) FLASH) of an embedded system is responsible for realizing system hardware initialization and application program booting functions, so that stability of the BOOT version and upgrading reliability of the BOOT version are crucial.

BOOT version upgrading may usually adopt upgrading by way of burning or online upgrading. Upgrading by way of burning requires specific burning hardware and software drive program, and thus is relatively complex regarding the environment setup and burning process. The burning is merely used for burning a BOOT version to equipment for the first time on a production line or for debugging in a laboratory. Online upgrading is relatively convenient, and only requires an embedded system to implement a BOOT online upgrading program and command. BOOT online upgrading may be implemented by inputting the online upgrading command on the equipment, and such a manner has been widely applied to system testing.

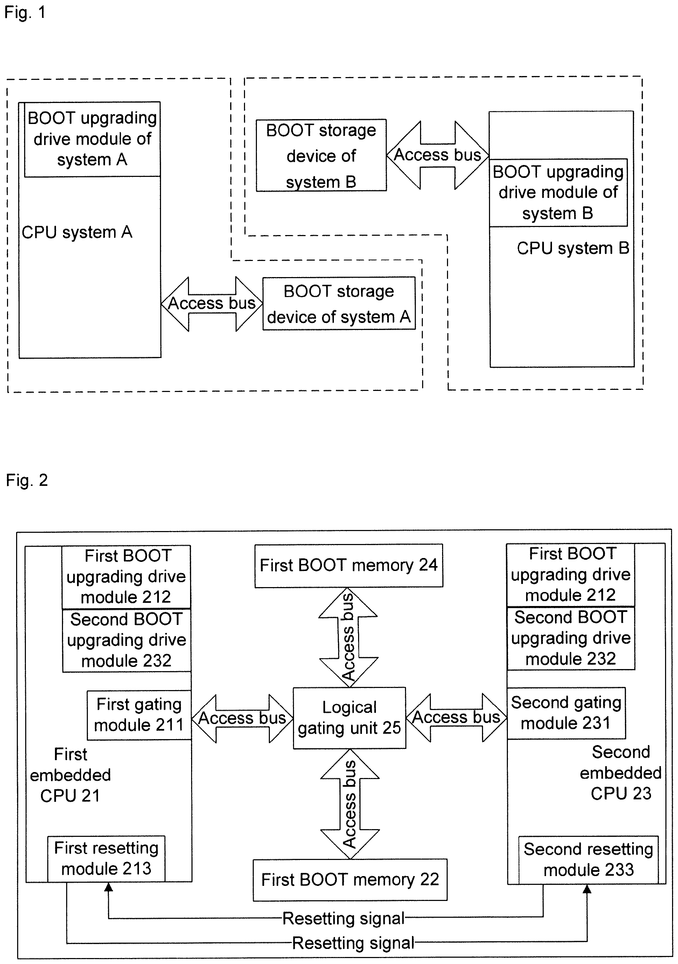

An existing related technology adopts systems shown in Fig. 1 to implement BOOT online upgrading. Two storage devices are adopted to store BOOT versions of two CPU systems respectively, and BOOT online upgrading functions of the corresponding systems are realized respectively. However, in a maintenance process, some conditions usually appear, such as power interruption in an upgrading process, an error of a BOOT upgrading drive program, upgrading of a new single board by an old BOOT version or a wrong BOOT version by a misoperation of a user, and own problem of an upgraded BOOT version, which may cause a BOOT upgrading failure or incapability of normal starting in case of successful upgrading. Once the above conditions appear, a BOOT may not implement hardware initialization to boot equipment to be started, and may even not start or continue an online upgrading operation, and it is even necessary to return the single board to a factory for burning or replace it with an alternative one, so that maintenance cost of the related data communication equipment is inevitably increased, and user experiences are also greatly reduced. Therefore, it is necessary to propose a new solution, to solve the abovementioned problems of BOOT online upgrading and effectively ensure successful online upgrading of a BOOT version for an embedded system.

### SUMMARY

In view of this, a main purpose of the disclosure is to provide a BOOT online upgrading device and method, to solve the problem of BOOT online upgrading failure or incapability of normal starting despite of successful upgrading.

To this end, the technical solutions of the disclosure are implemented as follows.

A BOOT online upgrading device is provided, which may include: a logical gating unit, at least two embedded CPUs and BOOT memories each corresponding to respective embedded CPUs may be connected to the logical gating unit through access buses; each embedded CPU may include BOOT upgrading drive modules for all the BOOT memories, and the BOOT upgrading drive modules may be configured to execute BOOT version updating on the BOOT memories; and the logical gating unit may be configured to provide an access channel from any embedded CPU to any BOOT memory.

In the solution, the device may include: a first embedded CPU, a first BOOT memory corresponding to the first embedded CPU, a second CPU and a second BOOT memory corresponding to the second embedded CPU, and the first embedded CPU, the first BOOT memory, the second embedded CPU and the second BOOT memory may be respectively connected to the logical gating unit through access buses;
each embedded CPU may include BOOT upgrading drive modules for all the BOOT memories, and the BOOT upgrading drive modules may be configured to execute BOOT version updating on the BOOT memories;
the logical gating unit may be configured to provide an access channel from any embedded CPU to any BOOT memory;
the first embedded CPU may include a first gating module, configured to control the logical gating unit to disconnect a current access channel and provide an access channel from the first embedded CPU to the second BOOT memory; and
the second embedded CPU may include a second gating module, configured to control the logical gating unit to disconnect the current access channel and provide an access channel from the second embedded CPU to the first BOOT memory.

In the solution, the drive modules for all the BOOT memories may include:
a first BOOT upgrading drive module, configured to execute BOOT version updating of the first BOOT memory; and
a second BOOT upgrading drive module, configured to execute BOOT version updating of the second BOOT memory.

In the solution, the first embedded CPU may further include: a first resetting module, configured to send a resetting signal to the second embedded CPU;
the second gating module may further be configured to, after the second embedded CPU receives the resetting signal sent by the first resetting module and is restarted, control the logical gating unit to recover an access channel from the second embedded CPU to the second BOOT memory to normally start the second embedded CPU by virtue of the updated BOOT version in the second BOOT memory;
the second embedded CPU may further include: a second resetting module, configured to send a resetting signal to the first embedded CPU; and
the first gating module may further be configured to, after the first embedded CPU receives the resetting signal sent by the second resetting module and is restarted, control the logical gating unit to recover an access channel from the first embedded CPU to the first BOOT memory to normally start the first embedded CPU by virtue of the updated BOOT version in the first BOOT memory.

In the solution, the first gating module of the first embedded CPU may further be configured to, after the second BOOT upgrading drive module executes BOOT version updating, control the logical gating unit to disconnect the current access channel and provide the access channel from the first embedded CPU to the first BOOT memory; and
the second gating module of the second embedded CPU may further be configured to, after the second BOOT upgrading drive module executes BOOT version updating, control the logical gating unit to disconnect the current access channel and provide the access channel from the first embedded CPU to the first BOOT memory.

In the solution, the logical gating unit may be configured as a default to provide the access channel from the first embedded CPU to the first BOOT memory and the access channel from the second embedded CPU to the second BOOT memory.

During execution, the logical gating unit, the BOOT upgrading drive modules, the first gating module, the second gating module, the first BOOT upgrading drive module, the second BOOT upgrading drive module, the first resetting module and the second resetting module may be implemented by a CPU, a Digital Signal Processor (DSP) or a Field-Programmable Gate Array (FPGA).

A BOOT online upgrading method is provided, which may include that:
a logical gating unit provides an access channel from any embedded CPU to any BOOT memory; and
BOOT version updating on any BOOT memory is executed through the access channel from any embedded CPU to any BOOT memory,
at least two embedded CPUs and BOOT memories each corresponding to respective embedded CPUs may be connected to the logical gating unit through access buses, and each embedded CPU may include drive modules of all the embedded CPUs.

In the solution, a first embedded CPU, a first BOOT memory corresponding to the first embedded CPU, a second embedded CPU and a second BOOT memory corresponding to the second embedded CPU may be connected to the logical gating unit through access buses respectively;
the method may include that: the first embedded CPU controls the logical gating unit to disconnect a current access channel and provide an access channel from the first embedded CPU to the second BOOT memory, and the first embedded CPU accesses the second BOOT memory and executes BOOT version updating on the second BOOT memory;
or, the method may include that: the second embedded CPU controls the logical gating unit to disconnect the current access channel and provide an access channel from the second embedded CPU to the first BOOT memory, and the second embedded CPU accesses the first BOOT memory and executes BOOT version updating on the first BOOT memory.

In the solution, the step that the first embedded CPU accesses the second BOOT memory and executes BOOT version updating on the second BOOT memory may be implemented as follows: the first embedded CPU calls a second BOOT upgrading drive module to access the second BOOT memory, and writes a BOOT version to be upgraded into the second BOOT memory through the first embedded CPU's own online upgrading interface; and
the operation that BOOT online upgrading of the first embedded CPU is executed through the access channel from the second embedded CPU to the first BOOT memory may be implemented as follows: the second embedded CPU calls a first BOOT upgrading drive module to access the first BOOT memory, and writes the BOOT version to be upgraded into the first BOOT memory through the second embedded CPU's own online upgrading interface.

In the solution, the method may further include that:
the first embedded CPU sends a resetting signal to the second embedded CPU;
after the second embedded CPU receives the resetting signal and is restarted, the logical gating unit is controlled to recover an access channel from the second embedded CPU to the second BOOT memory, and uses the updated BOOT version in the second BOOT memory for normal starting;
or, the method may further include that:
   the second embedded CPU sends a resetting signal to the first embedded CPU; and
   after the first embedded CPU receives the resetting signal and is restarted, the first embedded CPU controls the logical gating unit to recover an access channel from the first embedded CPU to the first BOOT memory, and uses the updated BOOT version in the first BOOT memory for normal starting.

In the solution, the method may further include that: after executing BOOT version updating by the second BOOT upgrading drive module, the first embedded CPU controls the logical gating unit to disconnect the current access channel and provide the access channel from the first embedded CPU to the first BOOT memory;
or, the method may further include that:
after executing BOOT version updating by the second BOOT upgrading drive module, the second embedded CPU controls the logical gating unit to disconnect the current access channel and provide the access channel from the first embedded CPU to the first BOOT memory.

In the solution, the method may further include that: the logical gating unit provides as a default the access channel from the first embedded CPU to the first BOOT memory and the access channel from the second embedded CPU to the second BOOT memory.

In the embodiments of the disclosure, the logical gating unit is added, the access channel from any embedded CPU to any BOOT memory may be provided, and moreover, each embedded CPU includes the drive modules for all the BOOT memories, so that when a BOOT of a current CPU may not be upgraded normally on line or may not be started, an access channel from another CPU to the current BOOT memory is provided, and the another CPU implements online upgrading of a BOOT version of the current CPU. Therefore, the problem of BOOT online upgrading failure or incapability of normal starting despite of successful upgrading is solved, BOOT online upgrading reliability is improved, and BOOT upgrading risk and later maintenance cost are reduced.

### BRIEF DESCRIPTION OF THE DRAWINGS

Fig. 1 is a structure diagram of an existing BOOT online upgrading device;
Fig. 2 is a structure diagram of a BOOT online upgrading device according to embodiment 1 of the disclosure;
Fig. 3 is a flowchart of BOOT online upgrading during upgrading of a BOOT version of a first embedded CPU according to embodiment 2 of the disclosure; and
Fig. 4 is a flowchart of BOOT online upgrading during upgrading of a BOOT version of a second embedded CPU according to embodiment 2 of the disclosure.

### DETAILED DESCRIPTION

In order to make the purpose, technical solutions and advantages of the disclosure clearer, the disclosure will be further described in detail below according to the following embodiments with reference to the drawings.

A basic thought of the disclosure is that: a BOOT online upgrading device is provided, which includes: a logical gating unit; at least two embedded CPUs and BOOT memories each corresponding to respective embedded CPUs are connected to the logical gating unit through access buses; each embedded CPU includes BOOT upgrading drive modules for all the BOOT memories, and the BOOT upgrading drive modules are configured to execute BOOT version updating on the BOOT memories; and the logical gating unit is configured to provide an access channel from any embedded CPU to any BOOT memory.

Correspondingly, a BOOT online upgrading method is also provided, which includes that: a logical gating unit provides an access channel from any embedded CPU to any BOOT memory; and BOOT version updating on any BOOT memory is executed through the access channel from any embedded CPU to any BOOT memory.

Multiple embedded CPUs responsible for different functions respectively are usually configured on an equipment architecture or a single board hardware. For example, on a master control single board, two independent CPUs responsible for single board control and data switching functions respectively are designed; or a CPU and a MCU responsible for single board control and environment monitoring functions respectively are designed. Each CPU is connected with a BOOT memory for storing its BOOT program, and a BOOT online upgrading program is implemented in a BOOT version and an application program respectively. In the embodiments of the disclosure, in terms of hardware, each BOOT memory is connected to a logical gating unit on a single board through an access bus, and meanwhile, each CPU is also connected to the logical gating unit through an access bus. The logical gating unit may provide access control channels from the CPUs to the BOOT memories and provide access from any CPU to any BOOT memory. Drive programs for all the BOOT memories are added into programs of each CPU, and only one CPU may access the same BOOT memory at the same time.

Under a default condition, each CPU accesses its respective BOOT memory to upgrade its own BOOT on line. If the BOOT of a current CPU may not be normally upgraded on line or may not be started, an access channel from another CPU to the current BOOT memory is provided, and the another CPU accesses the current BOOT memory, so that the BOOT version to be upgraded is wrote into the current BOOT memory through another CPU online upgrading interface. By this way, after the current CPU is reset or restarted, the updated BOOT version in the BOOT memory may be used for normal starting, so that the problems of BOOT upgrading failure, incapability of normal starting and the like are solved.

### Embodiment 1

As shown in Fig. 2, the embodiment of the disclosure provides a BOOT online upgrading device. The device includes two CPUs and two corresponding BOOT memories as well as a logical gating unit. In particular, the device includes a first embedded CPU 21, a first BOOT memory 22 corresponding to the first embedded CPU, a second embedded CPU 23, a second BOOT memory 24 corresponding to the second embedded CPU, and a logical gating unit 25. The first embedded CPU 21, the first BOOT memory 22, the second embedded CPU 23 and the second BOOT memory 24 are respectively connected to the logical gating unit 25 through access buses, and the logical gating unit 25 may provide an access channel from any embedded CPU to any BOOT memory.

Two embedded CPUs may use programs to control the logical gating unit to communicate the access channels from the CPUs to any BOOT memory, and only one CPU may access the same BOOT memory at the same time. Specifically, the first embedded CPU 21 includes a first gating module 211, configured to control the logical gating unit to disconnect a current access channel and provide an access channel from the first embedded CPU 21 to the second BOOT memory 24; and the second embedded CPU 23 includes a second gating module 231, configured to control the logical gating unit 25 to disconnect the current access channel and provide an access channel from the second embedded CPU 23 to the first BOOT memory 22.

Drive programs for all the BOOT memories are added into programs of each CPU to support a BOOT online upgrading function, that is, each embedded CPU includes BOOT upgrading drive modules for all the BOOT memories, and the BOOT upgrading drive modules execute BOOT version updating on the BOOT memories. Specifically, each of the first embedded CPU and the second embedded CPU includes a first BOOT upgrading drive module 212 and a second BOOT upgrading drive module 232. The first BOOT upgrading drive module 212 executes BOOT version updating of the first BOOT memory; and the second BOOT upgrading drive module 232 executes BOOT version updating of the second BOOT memory.

In the embodiment of the disclosure, after being reset or restarted, the CPUs may read updated BOOT versions in the corresponding BOOT memories for normal starting. Specifically, in the embodiment of the disclosure, the first embedded CPU 21 further includes: a first resetting module 213, configured to send a resetting signal to the second embedded CPU 23; and the second gating module 231 is further configured to, after the second embedded CPU 23 receives the resetting signal sent by the first resetting module 213 and is restarted, control the logical gating unit 25 to recover an access channel from the second embedded CPU 23 to the second BOOT memory 24 to normally start the second embedded CPU 23 by virtue of the updated BOOT version in the second BOOT memory 24.

The second embedded CPU 23 further includes: a second resetting module 233, configured to send a resetting signal to the first embedded CPU 21; and the first gating module 211 is further configured to, after the first embedded CPU 21 receives the resetting signal sent by the second resetting module 233 and is restarted, control the logical gating unit 25 to recover an access channel from the first embedded CPU 21 to the first BOOT memory 22 to normally start the first embedded CPU 21 by virtue of the updated BOOT version in the first BOOT memory 22.

After the updating, the first gating module of the first embedded CPU is further configured to, after the second BOOT upgrading drive module executes BOOT version updating, control the logical gating unit to disconnect the current access channel and provide the access channel from the first embedded CPU to the first BOOT memory; and the second gating module of the second embedded CPU is further configured to, after the second BOOT upgrading drive module executes BOOT version updating, control the logical gating unit to disconnect the current access channel and provide the access channel from the first embedded CPU to the first BOOT memory.

If a first BOOT of the first embedded CPU may not be normally upgraded on line or may not be started, the access channel from the second embedded CPU to the first BOOT memory is provided, and the second embedded CPU accesses the first BOOT memory. The BOOT version to be upgraded of the first embedded CPU is wrote into the first BOOT memory through an online upgrading interface of the second embedded CPU, and after being reset next time, the first embedded CPU may be normally started by virtue of the updated BOOT version. Similarly, if a second BOOT of the second embedded CPU may not be normally upgraded on line or may not be started, the first embedded CPU may write the BOOT version to be upgraded of the second embedded CPU into the second BOOT memory, and after being reset next time, the second embedded CPU may be normally started by virtue of the updated BOOT version.

Under a default condition, each CPU access its own BOOT memory to upgrade its own BOOT on line. That is, the logical gating unit 25 is further as a default configured to provide the access channel from the first embedded CPU to the first BOOT memory and provide the access channel from the second embedded CPU to the second BOOT memory.

### Embodiment 2

The embodiment 2 will describe in detail a specific implementation process of a BOOT online upgrading method corresponding to the BOOT online upgrading device of embodiment 1.

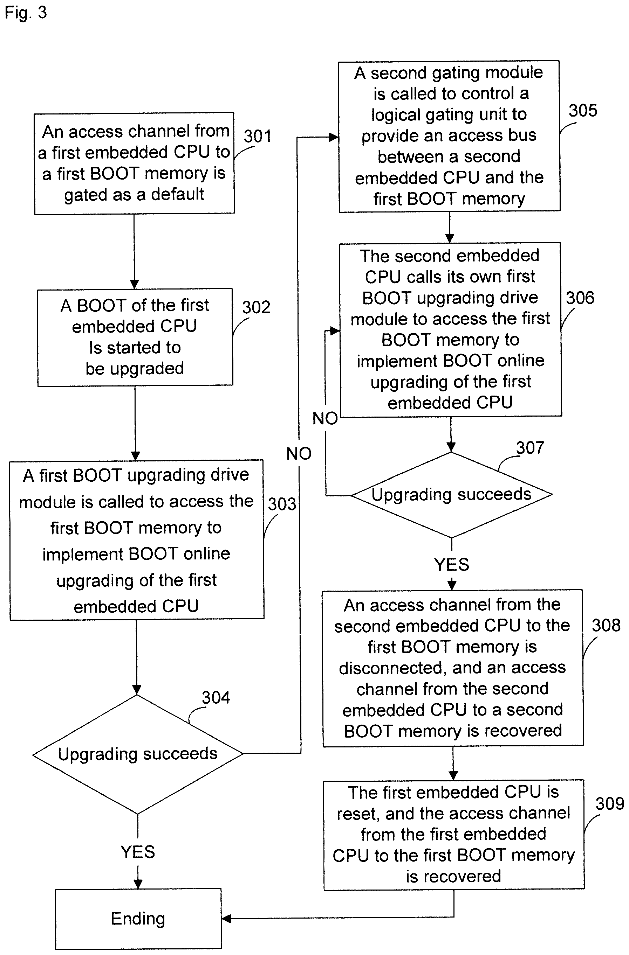

If a BOOT version of the first embedded CPU is required to be upgraded, as shown in Fig. 3, a specific implementation process is as follows.

Step 301: a logical gating unit provides as a default an access channel from the first embedded CPU to the first BOOT memory.

Step 302: the BOOT of the first embedded CPU is started to be upgraded.

Step 303: the first embedded CPU calls the first BOOT upgrading drive module to access the first BOOT memory, and writes the BOOT version to be upgraded into the first BOOT memory to implement BOOT online upgrading of the first embedded CPU.

Step 304: in case of successful upgrading, after the BOOT is restarted, the first embedded CPU is started by virtue of an upgraded BOOT program, and upgrading is ended; and in case of failed upgrading, Step 305 is continued to be executed.

Step 305: the second embedded CPU calls the second gating module to control the logical gating unit to disconnect the access channel from the first embedded CPU to the first BOOT memory and an access channel from the second embedded CPU to a second BOOT memory, and provide an access bus between the second embedded CPU and the first BOOT memory.

Step 306: the second embedded CPU calls its own first BOOT upgrading drive module to access the first BOOT memory, and writes the BOOT version to be upgraded into the first BOOT memory to implement BOOT online upgrading of the first embedded CPU.

Step 307: in case of successful upgrading, Step 305 is continued to be executed; and in case of failed upgrading, Step 306 is executed.

Step 308: after the upgrading is completed, the second embedded CPU calls the second gating module to control the logical gating unit to disconnect the access channel from the second embedded CPU to the first BOOT memory and recover the access channel from the second embedded CPU to the second BOOT memory.

Step 309: the second embedded CPU sends a resetting signal to the first embedded CPU to restart the first embedded CPU, and the first embedded CPU is reset, and calls the first gating module to control the logical gating unit to recover the access channel from the first embedded CPU to the first BOOT memory, and the upgrading is ended.

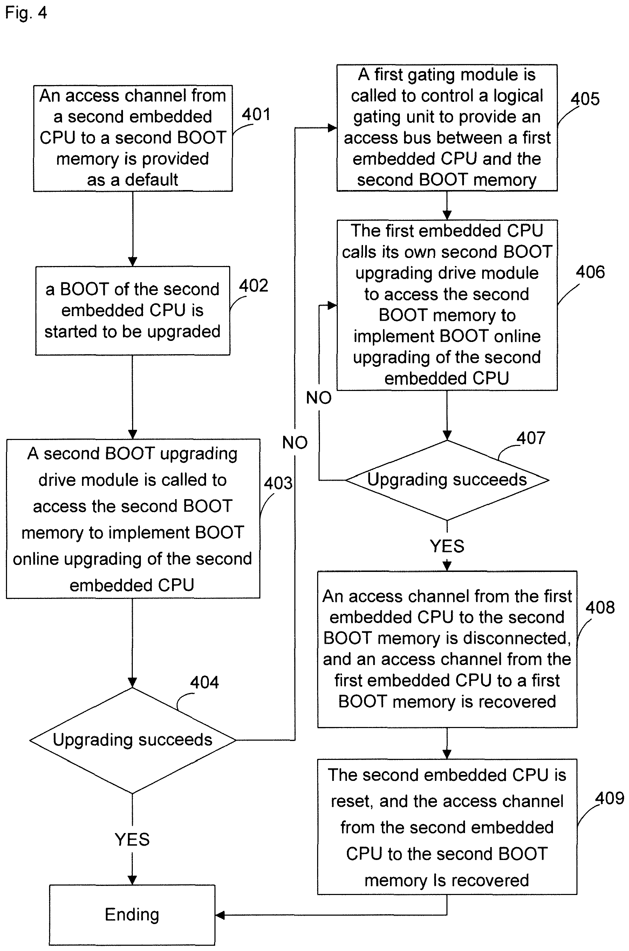

If a BOOT version of the second embedded CPU is required to be upgraded, as shown in Fig. 4, a specific implementation process is as follows.

Step 401: the logical gating unit a default provides the access channel from the second embedded CPU to the second BOOT memory as.

Step 402: a BOOT of the second embedded CPU is started to be upgraded.

Step 403: the second embedded CPU calls the second BOOT upgrading drive module to access the second BOOT memory, and writes the BOOT version to be upgraded into the second BOOT memory to implement BOOT online upgrading of the second embedded CPU.

Step 404: in case of successful upgrading, after the BOOT is restarted, the second embedded CPU is started by virtue of an upgraded BOOT program, and upgrading is ended; and in case of failed upgrading, Step 405 is continued to be executed.

Step 405: the first embedded CPU calls the first gating module to control the logical gating unit to disconnect the access channel from the second embedded CPU to the second BOOT memory and an access channel from the first embedded CPU to the first BOOT memory, and provide an access bus between the first embedded CPU and the second BOOT memory.

Step 406: the first embedded CPU calls its own second BOOT upgrading drive module to access the second BOOT memory, and writes the BOOT version to be upgraded into the second BOOT memory to implement BOOT online upgrading of the second embedded CPU.

Step 407: in case of successful upgrading, Step 405 is continued to be executed; and in case of failed upgrading, Step 406 is executed.

Step 408: after the upgrading is completed, the first embedded CPU calls the first gating module to control the logical gating unit to disconnect an access channel from the first embedded CPU to the second BOOT memory and recover the access channel from the first embedded CPU to the first BOOT memory.

Step 409: the first embedded CPU sends a resetting signal to the second embedded CPU to restart the second embedded CPU, and the second embedded CPU is reset, and calls the second gating module to control the logical gating unit to recover the access channel from the second embedded CPU to the second BOOT memory, and the upgrading is ended.

Obviously, those skilled in the art should know that each module or each step of the disclosure may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. As a consequence, the disclosure is not limited to any specific hardware and software combination.

The above is only the preferred embodiment of the disclosure and not intended to limit the scope of protection of the disclosure.

### INDUSTRIAL APPLICABILITY

In the embodiments of the disclosure, the logical gating unit is added, and as a result the access channel from any embedded CPU to any BOOT memory may be provided. Moreover, each embedded CPU includes the drive modules for all the BOOT memories, so that when a BOOT of a current CPU may not be upgraded normally on line or may not be started, an access channel from another CPU to the current BOOT memory is provided, and the another CPU implements online upgrading of a BOOT version of the current CPU. Therefore, the problem of BOOT online upgrading failure or incapability of normal starting despite of successful upgrading is solved, BOOT online upgrading reliability is improved, and BOOT upgrading risk and later maintenance cost are reduced.

## Claims

1. A BOOT online upgrading device, comprising: a logical gating unit, wherein at least two embedded Central Processing Units (CPUs) and BOOT memories each corresponding to respective embedded CPUs are connected to the logical gating unit through access buses; each embedded CPU comprises BOOT upgrading drive modules for all the BOOT memories, and the BOOT upgrading drive modules are configured to execute BOOT version updating on the BOOT memories; and the logical gating unit is configured to provide an access channel from any embedded CPU to any BOOT memory.

2. The device according to claim 1, comprising: a first embedded CPU, a first BOOT memory corresponding to the first embedded CPU, a second CPU and a second BOOT memory corresponding to the second embedded CPU, wherein the first embedded CPU, the first BOOT memory, the second embedded CPU and the second BOOT memory are respectively connected to the logical gating unit through access buses;
each embedded CPU comprises BOOT upgrading drive modules for all the BOOT memories, and the BOOT upgrading drive modules are configured to execute the BOOT version updating on the BOOT memories;
the logical gating unit is configured to provide an access channel from any embedded CPU to any BOOT memory;
the first embedded CPU comprises a first gating module, configured to control the logical gating unit to disconnect a current access channel and provide an access channel from the first embedded CPU to the second BOOT memory; and
the second embedded CPU comprises a second gating module, configured to control the logical gating unit to disconnect the current access channel and provide an access channel from the second embedded CPU to the first BOOT memory.

3. The device according to claim 2, wherein the drive modules for all the BOOT memories comprise:
a first BOOT upgrading drive module, configured to execute BOOT version updating of the first BOOT memory; and
a second BOOT upgrading drive module, configured to execute BOOT version updating of the second BOOT memory.

4. The device according to claim 3, wherein
the first embedded CPU further comprises: a first resetting module, configured to send a resetting signal to the second embedded CPU;
the second gating module is further configured to, after the second embedded CPU receives the resetting signal sent by the first resetting module and is restarted, control the logical gating unit to recover an access channel from the second embedded CPU to the second BOOT memory to normally start the second embedded CPU by virtue of the updated BOOT version in the second BOOT memory;
the second embedded CPU further comprises: a second resetting module, configured to send a resetting signal to the first embedded CPU; and
the first gating module is further configured to, after the first embedded CPU receives the resetting signal sent by the second resetting module and is restarted, control the logical gating unit to recover an access channel from the first embedded CPU to the first BOOT memory to normally start the first embedded CPU by virtue of the updated BOOT version in the first BOOT memory.

5. The device according to claim 3, wherein
the first gating module of the first embedded CPU is further configured to, after the second BOOT upgrading drive module executes BOOT version updating, control the logical gating unit to disconnect the current access channel and provide the access channel from the first embedded CPU to the first BOOT memory; and
the second gating module of the second embedded CPU is further configured to, after the second BOOT upgrading drive module executes BOOT version updating, control the logical gating unit to disconnect the current access channel and provide the access channel from the first embedded CPU to the first BOOT memory.

6. The device according to any one of claims 2-5, wherein the logical gating unit is configured as a default to provide the access channel from the first embedded CPU to the first BOOT memory and the access channel from the second embedded CPU to the second BOOT memory.

7. A BOOT online upgrading method,
the method comprising:
providing, by a logical gating unit, an access channel from any embedded Central Processing Unit (CPU) to any BOOT memory; and
executing BOOT version updating on any BOOT memory through the access channel from any embedded CPU to any BOOT memory,
wherein at least two embedded CPUs and BOOT memories each corresponding to respective embedded CPUs are connected to the logical gating unit through access buses, and each embedded CPU comprises drive modules of all the embedded CPUs.

8. The method according to claim 7, wherein
a first embedded CPU, a first BOOT memory corresponding to the first embedded CPU, a second embedded CPU and a second BOOT memory corresponding to the second embedded CPU are connected to the logical gating unit through access buses respectively;
the method comprises: controlling, by the first embedded CPU, the logical gating unit to disconnect a current access channel and provide an access channel from the first embedded CPU to the second BOOT memory, and accessing, by the first embedded CPU, the second BOOT memory and executing BOOT version updating on the second BOOT memory;
or, the method comprises: controlling, by the second embedded CPU, the logical gating unit to disconnect the current access channel and provide an access channel from the second embedded CPU to the first BOOT memory, and accessing, by the second embedded CPU, the first BOOT memory and executing BOOT version updating on the first BOOT memory.

9. The method according to claim 8, wherein
accessing, by the first embedded CPU, the second BOOT memory and executing BOOT version updating on the second BOOT memory is implemented by: calling, by the first embedded CPU, a second BOOT upgrading drive module to access the second BOOT memory, and writing a BOOT version to be upgraded into the second BOOT memory through the first embedded CPU's own online upgrading interface; and
executing BOOT online upgrading of the first embedded CPU through the access channel from the second embedded CPU to the first BOOT memory is implemented by: calling, by the second embedded CPU, a first BOOT upgrading drive module to access the first BOOT memory, and writing the BOOT version to be upgraded into the first BOOT memory through the second embedded CPU's own online upgrading interface.

10. The method according to claim 9, further comprising:
sending, by the first embedded CPU, a resetting signal to the second embedded CPU;
after the second embedded CPU receives the resetting signal and is restarted, controlling the logical gating unit to recover an access channel from the second embedded CPU to the second BOOT memory, and using the updated BOOT version in the second BOOT memory for normal starting;
or, the method further comprising:
sending, by the second embedded CPU, a resetting signal to the first embedded CPU; and
after the first embedded CPU receives the resetting signal and is restarted, controlling, by the first embedded CPU, the logical gating unit to recover an access channel from the first embedded CPU to the first BOOT memory, and using the updated BOOT version in the first BOOT memory for normal starting.

11. The method according to claim 9, further comprising:
after executing BOOT version updating in the second BOOT upgrading drive module, controlling, by the first embedded CPU, the logical gating unit to disconnect the current access channel and provide the access channel from the first embedded CPU to the first BOOT memory;
or, the method further comprising:
after executing BOOT version updating in the second BOOT upgrading drive module, controlling, by the second embedded CPU, the logical gating unit to disconnect the current access channel and provide the access channel from the first embedded CPU to the first BOOT memory.

12. The method according to any one of claims 8-12, further comprising:
providing as a default, by the logical gating unit, the access channel from the first embedded CPU to the first BOOT memory and the access channel from the second embedded CPU to the second BOOT memory.
